(19) **Europäisches Patentamt / European Patent Office / Office européen des brevets**

(11) **EP 4 761 129 A1**

(12) **EUROPEAN PATENT APPLICATION**
published in accordance with Art. 153(4) EPC

(43) Date of publication:
**17.06.2026  Bulletin 2026/25**

(21) Application number: **24852309.4**

(22) Date of filing: **07.08.2024**

(51) International Patent Classification (IPC):
**H04B 7/06** (2006.01)   **H04B 7/0456** (2017.01)
**H04B 17/373** (2015.01)   **H04B 7/01** (2006.01)
**H04W 8/24** (2009.01)   **H04L 5/00** (2006.01)
**H04W 88/02** (2009.01)

(52) Cooperative Patent Classification (CPC):
**H04B 7/01; H04B 7/0456; H04B 7/06;**
**H04B 17/373; H04L 5/00; H04W 8/24; H04W 88/02**

(86) International application number:
**PCT/KR2024/011642**

(87) International publication number:
**WO 2025/033955 (13.02.2025 Gazette 2025/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **08.08.2023  US 202363531543 P**

(71) Applicant: **LG Electronics Inc.**
**Yeongdeungpo-gu**
**Seoul 07336 (KR)**

(72) Inventors:
• **KIM, Hyungtae**
  **Seoul 06772 (KR)**
• **KANG, Jiwon**
  **Seoul 06772 (KR)**
• **PARK, Haewook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR REPORTING CHANNEL STATE INFORMATION IN WIRELESS COMMUNICATION SYSTEM**

(57)    A method and a device for reporting channel state information in a wireless communication system are disclosed. The method performed by a terminal, according to one embodiment of the present disclosure, may comprise the steps of: receiving configuration information for channel state information (CSI) reporting; receiving at least one CSI-RS; and transmitting CSI processed on the basis of the configuration information and the at least one CSI-RS. Here, a specific codebook type related to CSI prediction is configured by means of the configuration information, N number of aperiodic CSI S-RSs for channel measurement are configured with respect to the CSI reporting, and, on the basis that the N exceeds the number of CPUs that can be simultaneously supported by the terminal, the number of CSI processing units for processing the CSI can be fixed to a pre-defined specific value.

FIG.9

```
          START
            │
            ▼
┌──────────────────────────────┐
│ Receive configuration information │  S910
│        for CSI report         │
└──────────────────────────────┘
            │
            ▼
┌──────────────────────────────┐
│   Receive at least one CSI-RS  │  S920
└──────────────────────────────┘
            │
            ▼
┌──────────────────────────────┐
│  Transmit CSI processed based on │  S930
│  the configuration information and │
│    the at least one CSI-RS     │
└──────────────────────────────┘
            │
            ▼
           END
```

**Description**

[TECHNICAL FIELD]

The present disclosure relates to a wireless communication system, and more particularly, to a method and device for performing channel state information (CSI) reporting in a wireless communication system.

[BACKGROUND ART]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and device for performing channel state information (CSI) reporting in a wireless communication system.

The technical object of the present disclosure is to provide a method and device for configuring/indicating/defining the number of CSI processing units (CPUs) for CSI processing, in relation to CSI prediction.

The technical objects to be achieved by the present disclosure are not limited to the above-described technical objects, and other technical objects which are not described herein will be clearly understood by those skilled in the pertinent art from the following description.

[Technical Solution]

A method performed by a user equipment in a wireless communication system according to an aspect of the present disclosure may comprise: receiving configuration information for channel state information (CSI) report; receiving at least one CSI-reference signal (CSI-RS); and transmitting CSI processed based on the configuration information and the at least one CSI-RS. Herein, based on a specific codebook type related to CSI prediction being configured by the configuration information and N aperiodic CSI-RSs for channel measurement being configured for the CSI report, a number of CSI processing units for processing the CSI may be N*M, wherein M may be based on capability information of the UE. In addition, based on that the N exceeds a number of CPUs simultaneously supportable by the UE, the number of CSI processing units for processing the CSI may be fixed to a pre-defined specific value.

A method performed by a base station in a wireless communication system according to an additional aspect of the present disclosure may comprise: transmitting configuration information for channel state information (CSI) report; transmitting at least one CSI-reference signal (CSI-RS); and receiving CSI processed based on the configuration information and the at least one CSI-RS. Herein, based on a specific codebook type related to CSI prediction being configured by the configuration information and N aperiodic CSI-RSs for channel measurement being configured for the CSI report, a number of CSI processing units for processing the CSI may be N*M, wherein M may be based on capability information of the UE. In addition, based on that the N exceeds a number of CPUs simultaneously supportable by the UE, the number of CSI processing units for processing the CSI may be fixed to a pre-defined specific value.

[Technical Effects]

According to various embodiments of the present disclosure, a method and device for performing channel state information (CSI) reporting in a wireless communication system may be provided.

According to various embodiments of the present disclosure, a method and apparatus for configuring/indicating/defining the number of CSI processing units (CPUs) for CSI processing in relation to CSI prediction may be provided.

According to various embodiments of the present disclosure, there is a technical effect capable of supporting CSI calculation even when the number of CPUs required for CSI processing exceeds the number of CPUs supported by a user equipment (UE).

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a general functional architecture related to Functionality-based LCM and Model-based LCM.
FIG. 8 illustrates signaling operations for procedures related to AI/ML.
FIG. 9 is a diagram illustrating the operation of a user equipment (UE) in a wireless communication system to which the present disclosure may be applied.
FIG. 10 is a diagram illustrating the operation of a base station in a wireless communication system to which the present disclosure may be applied.
FIG. 11 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The technology described in the present specification may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented by a wireless technology such as universal terrestrial radio access (UTRA) or CDMA2000. TDMA may be implemented by a wireless technology such as global system for mobile communications (GSM)/ general packet radio service (GPRS)/ enhanced data rates for GSM evolution (EDGE). OFDMA may be implemented by a wireless technology such as institute of electrical and electronics engineers (IEEE) 802.11 (Wi-Fi), IEEE 802.16 (WiMAX), IEEE 802-20, evolved UTRA (E-UTRA), long term evolution (LTE), and 5G NR.

The technology described in the present specification may be implemented by 6G wireless technology, and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

To clarify description, it is described based on a 3GPP communication system (e.g., LTE-A, NR, 6G), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR/6G may be referred to as a 3GPP system. "xxx" means a detailed number for a standard document. LTE/NR/6G may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access

IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

The aforementioned NR system is a new clean-slate type mobile communication system as a successor technology of long term evolution (LTE), having characteristics such as high performance, low latency, and high availability. In the case of the NR system, all available spectrum resources can be utilized, such as a low frequency band below 1 GHz, a mid-frequency band of 1 GHz to 10 GHz, and a high frequency (millimeter wave) band of 24 GHz or higher. Based on the fundamental technology of the NR system, a 6G mobile communication system (hereinafter, 6G system) is being developed.

The 6G system is aimed at (i) a very high data rate per device, (ii) a very large number of connected devices, (iii) global connectivity, (iv) very low latency, (v) reduction of energy consumption of battery-free internet of things (IoT) devices, (vi) ultra-reliable connectivity, and (vii) connected intelligence having machine learning capability. The vision of the 6G system may be four aspects such as intelligent connectivity, deep connectivity, holographic connectivity, and ubiquitous connectivity.

The NR system and a new RAT system (hereinafter, next-generation RAT system) including the 6G system uses an OFDM transmission scheme or a transmission scheme similar thereto. The next-generation RAT system may follow OFDM parameters different from OFDM parameters of LTE. Alternatively, the next-generation RAT system may follow the numerology of the existing LTE/LTE-A as it is, but may support a larger system bandwidth (e.g., 100 MHz). Alternatively, one cell may support a plurality of numerologies. That is, terminals operating with different numerologies may coexist in one cell.

A numerology corresponds to one subcarrier spacing in a frequency domain. As a reference subcarrier spacing is scaled by an integer N, a different numerology may be defined.

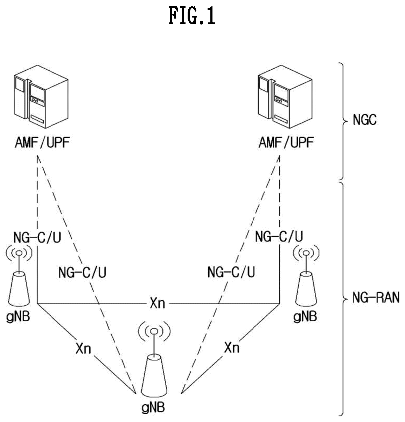

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

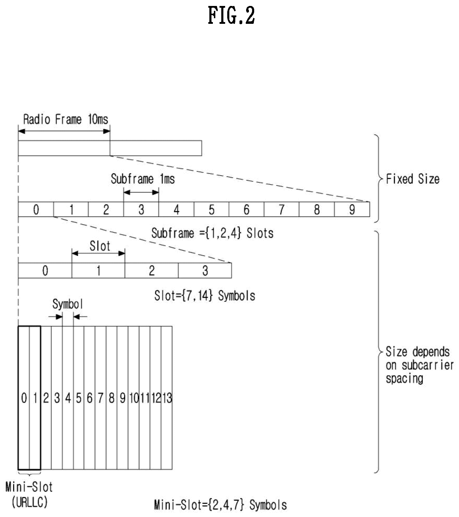

FIG. 2 illustrates a frame structure in a wireless communication system to which the present disclosure may be applied.

A next-generation RAT system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a next-generation RAT system.

Hereinafter, an OFDM numerology and frame structure which may be considered in a next-generation RAT system will be described. A plurality of OFDM numerologies supported in a next-generation RAT system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

A next-generation RAT system supports a plurality of numerologies (or subcarrier spacings (SCS)) for supporting a variety of 5G/6G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. Although not described in Table 1, 6G systems may additionally support 480kHz/960kHz SCS.

The frequency bands of next-generation RAT systems are defined by various types of frequency ranges (e.g., FR1, FR2, etc.). For example, FR1 and FR2 may be configured as shown in Table 2 below. Additionally, FR2 may refer to millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in a next-generation RAT system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=$ 10ms. Here, a radio frame is configured with 10 subframes having a duration of $T_{sf}=(\Delta f_{max}N_f/1000)\cdot T_c=$1ms, respectively. In this case, there may be one set of frames for an uplink and one set of frames for a downlink.

In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,μ}$ | $N_{slot}^{subframe,μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,μ}$ | $N_{slot}^{subframe,μ}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a next-generation RAT system, an antenna port, a resource grid, a resource element, a resource block, a carrier part, etc. may be considered. Hereinafter, the physical resources which may be considered in a next-generation RAT system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

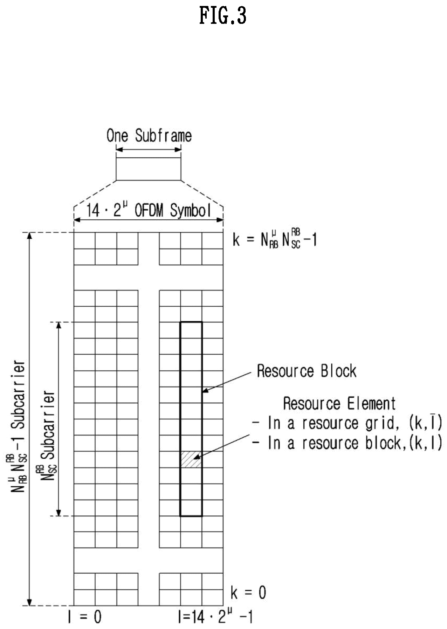

FIG. 3 illustrates a resource grid in a wireless communication system to which the present disclosure may be applied.

In reference to FIG. 3, it is illustratively described that a resource grid is configured with $N_{RB}^{μ}N_{sc}^{RB}$ subcarriers in a frequency domain and one subframe is configured with $14·2^μ$ OFDM symbols, but it is not limited thereto. In a next-generation RAT system, a transmitted signal is described by OFDM symbols of $2^μN_{symb}^{(μ)}$ and one or more resource grids configured with $N_{RB}^{μ}N_{sc}^{RB}$ subcarriers. Here, $N_{RB}^{μ}≤N_{RB}^{max,μ}$. The $N_{RB}^{max,μ}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{μ}N_{sc}^{RB}-1$ is an index in a frequency domain and $l'=0,...,2^μN_{symb}^{(μ)}-1$ refers to a position of a symbol in a subframe. When referring to a resource element in a slot, an index pair (k,l) is used. Here, $l=0,...,N_{symb}^{μ}-1$. A resource element (k,l') for μ and an antenna port p corresponds to a complex value, $a_{k,l'}^{(p,μ)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{μ}$ and a resource element (k,l) for a subcarrier spacing configuration μ in a frequency domain is given as in the following Equation 1.

**【Equation 1】**

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

**【Equation 2】**

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

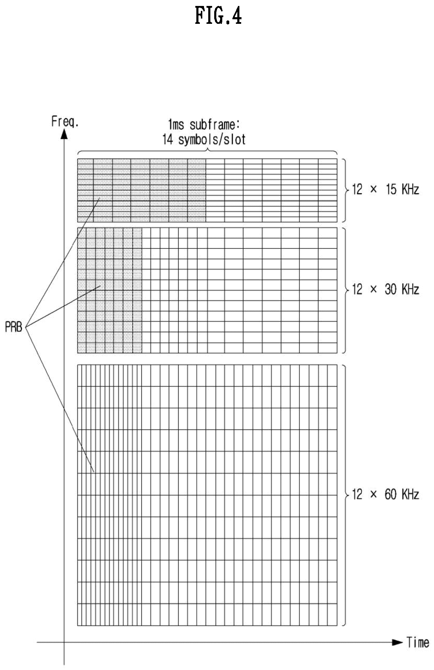

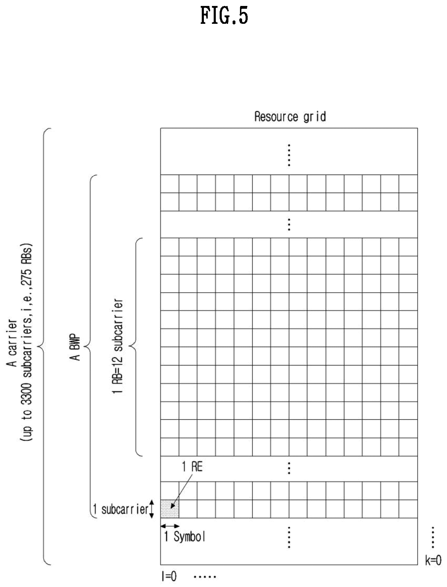

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In a next-generation RAT system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

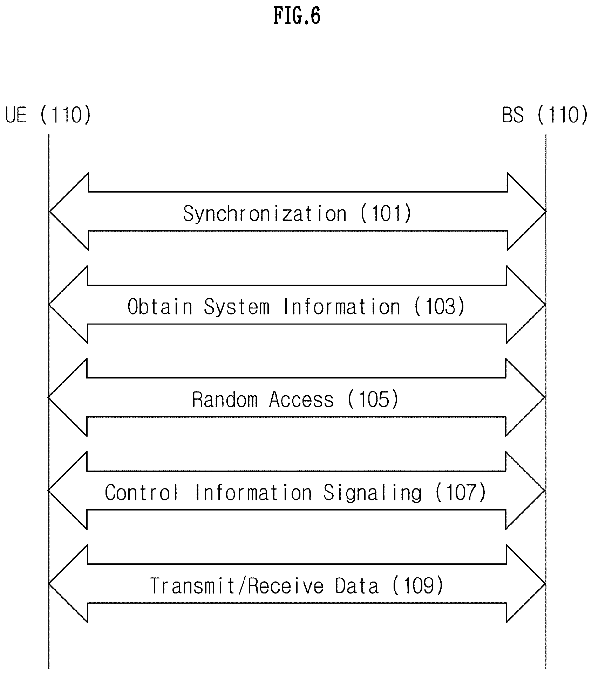

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

The second node of FIG. 6 supports dynamic spectrum sharing (DSS), and may provide connection not only to nodes in which 6G technology is implemented but also to nodes in which pre-6G wireless communication (e.g., 5G, 4G) technology is implemented. That is, the first node of FIG. 6 may have 6G technology implemented or pre-6G wireless communication (e.g., 5G, 4G) technology implemented. In addition, the first node and/or the second node may support not only a non-overlapping full duplex mode but also a full duplex mode.

In FIG. 6, for the sake of simplification of explanation, the first node and the second node are assumed to be a user equipment (UE) and a base station, respectively, and an operation in which a UE (110) and a base station (120) transmit and/or receive data, and operations performed prior thereto, are illustrated. However, the operation of FIG. 6 is not limited to an operation between a UE and a base station, and may be interpreted as an operation between the first node and the second node. In addition, in FIG. 6, a direct transmission/reception operation of wireless signals between the UE (110) and the base station (120) is illustrated, but one or more intermediate points may exist between the UE (110) and the base station (120), and a wireless signal may be transmitted and received via the one or more intermediate points.

Referring to FIG. 6, in step 101, the UE (110) and the base station (120) perform synchronization. For example, the UE (110) performs an initial cell search operation. Specifically, the UE (110) may detect at least one synchronization signal for base station connection, which is transmitted from the base station (120) according to a predefined rule. Here, the synchronization signal may include a plurality of synchronization signals classified according to structure or use (e.g., a first synchronization signal (e.g., a primary synchronization signal), a second synchronization signal (e.g., a secondary synchronization signal), etc.). Through this, the UE (110) may identify a boundary of a unit (e.g., a frame, a subframe, a slot, and/or a symbol) constituting radio signal transmission of the base station (120), and may acquire information (e.g., a cell identifier) on the base station (120).

In step 103, the UE (110) acquires system information transmitted from the base station (120). The system information is information related to attributes, characteristics, and/or capabilities of the base station (120) necessary for accessing the base station (120) and using services, and may be classified according to contents (e.g., whether it is essentially required for access), transmission structure (e.g., channel used, whether it is provided on-demand), etc. For example, the system information may be classified into first system information (e.g., a master information block (MIB), primary system information), second system information (e.g., a system information block (SIB), secondary system information), etc. If necessary, the UE (110) may transmit a signal requesting system information before receiving the system information. However, the requesting and providing of the system information may be performed after a random access procedure described later.

In step 105, the UE (110) and the base station (120) perform a random access procedure. The UE (110) may transmit and/or receive at least one message (e.g., a random access preamble, a random access response (RAR) message, etc.) for the random access procedure, based on information related to a channel for the random access procedure of the base station (120), which is acquired through the system information (e.g., channel location, channel structure, structure of supported preambles, etc.). For example, the UE (110) may transmit a first message (e.g., preamble, MSG1) through a channel for the random access procedure, receive a second message (e.g., RAR message, MSG2), transmit a third message (e.g., MSG3) including information (e.g., identification information) related to the UE (110) to the base station (120) using scheduling information included in the second message, and receive a fourth message (e.g., MSG4) for contention resolution and/or connection establishment. In another example, the first message and the third message may be transmitted and received as one message, or the second message and the fourth message may be transmitted and received as one message.

In step 107, the UE (110) and the base station (120) perform signaling of control information. Here, the control information may be defined in various layers, such as a layer controlling connection (e.g., a radio resource control (RRC) layer), a layer processing mapping between logical channels and transport channels (e.g., a media access control (MAC) layer), and a layer processing physical channels (e.g., a physical (PHY) layer). For example, the UE (110) and the base station (120) may perform at least one of signaling for establishing connection, signaling for determining configuration related to communication, and signaling for indicating allocated resources.

In step 109, the UE (110) and the base station (120) transmit and/or receive data. In other words, the UE (110) and the base station (120) process data and may transmit and/or receive the data based on the signaling of the control information. For example, when transmitting data, the UE (110) or the base station (120) may perform at least one of channel encoding, rate matching, scrambling, constellation mapping, layer mapping, waveform modulation, antenna mapping, and resource mapping for information bits. Conversely, when receiving data, the UE (110) or the base station (120) may perform at least one of signal extraction from resources, waveform demodulation per antenna, signal placement considering layer mapping, constellation demapping, descrambling, and channel decoding.

Table 5 represents an example of a DCI format in a next-generation RAT system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A UE may be configured at list of up to M TCI-State configurations in a higher layer parameter PDSCH-Config to decode a PDSCH according to a detected PDCCH having intended DCI for a corresponding UE and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Artificial intelligence (AI) / machine learning (ML) related operations

AI/ML may be introduced/applied to the next-generation RAT system described in the present disclosure.

When AI is introduced into communication, real-time data transmission can be simplified and enhanced. AI can determine how complex target tasks are performed by using numerous analyses. That is, AI can increase efficiency and reduce processing delay. Time-consuming tasks such as handover, network selection, and resource scheduling can be performed instantly by using AI. AI can also play an important role in M2M, machine-to-human, and human-to-machine communication. In addition, AI can enable rapid communication in Brain Computer Interface (BCI). An AI-based communication system can be supported by meta-materials, intelligent structures, intelligent networks, intelligent devices, intelligent cognitive radios, self-sustaining wireless networks, and machine learning.

Hereinafter, a functional framework for AI/ML operation will be described.

Hereinafter, for a more specific description of AI (or AI/ML), terms may be defined as follows.

- Data collection: data collected from a network node, a management entity, or a terminal, etc. as a basis for AI model training, data analysis, and inference.
- AI model: a data-driven algorithm applying AI technology, which generates a set of outputs including prediction information and/or decision parameters, based on a set of inputs.
- AI/ML training: an online or offline process of training an AI model by learning functions and patterns that best represent data and are trained for inference, in order to obtain an AI/ML model.
- AI/ML inference: a process of predicting or inducing decisions based on the collected data and the AI model by using the trained AI model.

The Life Cycle Management (LCM) procedure for an AI/ML model (i.e., model training, model deployment, model inference, model monitoring, model updating, etc.) can be classified into functionality-based LCM and model-based LCM. In the functionality-based LCM, the AI/ML model may not be identifiable in the network, and the network may instruct activation/deactivation/fallback/switching of the AI/ML functionality. In the model-ID (identifier)-based LCM, the AI/ML model can be identifiable in the network, and the network/terminal may activate/deactivate/select/switch the AI/ML model through the model ID.

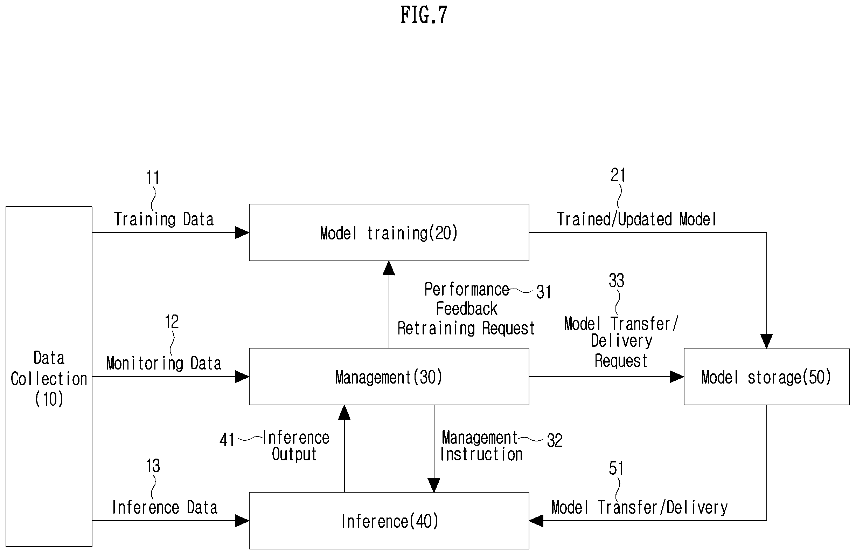

FIG. 7 illustrates a general functional architecture related to both the functionality-based LCM and the model-based LCM. Some functions or some data/information/command flows (i.e., arrows) illustrated in FIG. 7 may be omitted.

Referring to FIG. 7, a general functional framework may be configured to include a Data Collection function (10), a Model Training function (20), a Management function (30), an Inference function (40), and a Model Storage function (50).

The Data Collection function (10) is a function of providing input data to the Model Training function (20), the Management function (30), and the Inference function (40). The Data Collection function (10) may perform data preparation based on raw data, and may provide input data processed through the data preparation. Examples of raw data may include received data/measurement data from terminals or other network entities, inference/output of an AI/ML model, and the like. The Data Collection function (10) may be performed by a single entity (e.g., a terminal, a network node, etc.), but may also be performed by a plurality of entities.

Here, Training Data (11) refers to data necessary as input for the AI/ML Model Training function (20). Monitoring Data (12) refers to data necessary as input for the Management (30) of the AI/ML model or the AI/ML functionality.

Inference Data (13) refers to data necessary as input for the AI/ML Inference function (40).

The Model Training function (20) is a function of performing AI/ML model training, validation, and testing capable of generating model performance metrics that can be used as part of an AI/ML model test procedure. The Model Training function (20) may perform data preparation (e.g., data pre-processing and cleaning, forming and transformation) based on the Training Data (11) delivered from the Data Collection function (10), if necessary.

A trained/updated model (21): when a Model Storage function (50) is present, the trained, validated, and tested AI/ML model is delivered to the Model Storage function (50), or an updated version of the model is delivered to the Model Storage function (50).

The Management function (30) is a function of supervising the operation of the AI/ML model or the AI/ML functionality. In addition, the Management function (30) may perform a decision to guarantee proper inference operation based on data received from the Data Collection function (10) (i.e., Monitoring Data (12)) and/or data received from the Inference function (40) (i.e., Inference Output (41)).

A Management Instruction (32) is information necessary as input for managing the Inference function (40). The related information may include selection/(de)activation/switching of an AI/ML model or an AI/ML-based functionality, and may further include fallback to non-AI/ML operation (i.e., not relying on an inference process).

A Model Transfer/Delivery Request (33) may be used for requesting model(s) from the Model Storage (50).

Performance Feedback/Retraining Request (31) refers to information necessary as input for the Model Training function (20) (e.g., for the purpose of model (re)training or updating).

The Inference function (40) is a function of providing output from a process of applying an AI/ML model or AI/ML functionality using data (i.e., Inference Data (13)) provided by the Data Collection (10) as input. The Inference function (40) may perform data preparation (e.g., data pre-processing and cleaning, forming and transformation) based on the Inference Data (13) delivered by the Data Collection (10), if necessary.

Inference Output (41) is data used in the Management function (30) for monitoring performance of the AI/ML model or the AI/ML functionality. The Inference Output (41) may include inference output of the AI/ML model generated by the Inference function (40), and the details of the inference output may vary depending on a use case.

The Model Storage function (50) is a function of storing trained/updated models that can be used to perform the Inference function (40). The Model Storage function (50) illustrated in FIG. 7 may be used as a reference point, if applicable, in protocol termination, model transfer/delivery, and related processes. In addition, the Model Storage function (50) is merely one example, and is not intended to limit the actual storage location of the AI/ML model, and may also be omitted.

Model Transfer/Delivery (51) is used for delivering an AI/ML model to the inference function.

Depending on whether or not the AI/ML function is capable among a plurality of nodes, cooperation levels can be defined as follows, and variations due to a combination of a plurality of levels or separation of any one level are also possible.

Cat 0a) No collaboration framework: An AI/ML algorithm is purely implementation-based, and no wireless interface modification is required.

Cat 0b) This level corresponds to a framework with no collaboration, which involves a modified wireless interface adapted to an efficiently implementation-based AI/ML algorithm.

Cat 1) Node-to-node support is involved to improve the AI/ML algorithm of each node. For example, this applies when a certain node receives support from another node (for training, adaptation, etc.), and vice versa. At this level, model exchange between network nodes is not required.

Cat 2) Joint AI/ML operation among a plurality of nodes can be performed. This level requires AI/ML model command or exchange between network nodes.

FIG. 7 corresponds to a drawing illustrating an overall functional framework for an AI/ML model, and not all functions and/or all data/information/command signals illustrated in FIG. 7 are necessarily performed within a specific node, but only some may be performed.

The AI/ML model can be classified into a One-side model and a Two-side model, depending on whether training and/or inference is performed in a single node or jointly/sequentially performed in a plurality of nodes.

A One-side model may mean an AI/ML model in which inference is entirely performed by a single node (e.g., a UE or a network). Here, training of the AI/ML model may also be entirely performed by one node. Training and inference of the AI/ML model may be performed by the same node, or the training and inference of the AI/ML model may be performed by different nodes, respectively.

A Two-side model may mean an AI/ML model in which joint inference is performed by a plurality of nodes (e.g., a UE and a network). Joint inference means that inference is jointly performed across a plurality of nodes. For example, a first part of inference may be performed by a first node, and a remaining part of inference may be performed by a second node. The Two-side model can be classified into several types according to the training method of the AI/ML model.

- First type: An AI/ML model may be trained in one node. In this case, joint training may be performed. Thereafter, the trained model may be distributed to other nodes/entities.

- Second type: Joint training of an AI/ML model may be performed respectively in a plurality of nodes/entities (e.g., a network and a UE). Joint training may mean that model generation (e.g., a CSI generation part) and model reconstruction (compression of CSI per sub-use case) are trained in the same loop for forward activation and backward gradient. In this type, joint training may include both simultaneous training (i.e., model generation training and model reconstruction training are simultaneously performed) and sequential training (i.e., model reconstruction training is performed after model generation training).

- Third type: Separate training of an AI/ML model may be performed respectively in a plurality of nodes (e.g., a network and a UE). Separate training may mean that training sequentially starts in one node and continues in another node. In this case, a first node first performs the AI/ML model, and when training data is shared to a second node, the second node may perform the AI/ML model using the shared training data. For example, training for a CSI generation part may be performed by a UE, and CSI reconstruction may be performed by the network.

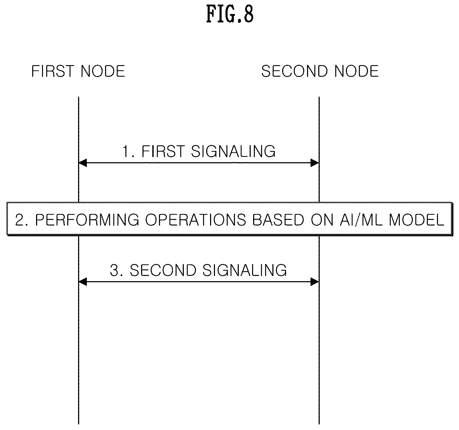

The operation described in the present disclosure below, even without a separate mention (i.e., without an explicit mention of being by/based on/for an AI/ML model), may be described/interpreted as an operation based on an AI/ML model as illustrated in FIG. 8.

In addition, unless particularly limited in the description of the present disclosure, the AI/ML model may correspond to a One-side model in which inference is entirely performed by a single node, or a Two-side model in which joint inference is performed by a plurality of nodes.

Step 1: In the following description of the present disclosure, signaling (e.g., information/data/channel/signal, etc.) or a set of signaling between a specific node (e.g., a UE, a network, etc.) and another node, even without a separate mention, may be interpreted as Step 1 signaling or a set of signaling used to perform an operation based on an AI/ML model. For example, it may correspond to training data for training (i.e., generation and/or reconstruction) of the AI/ML model of FIG. 7, inference data for inference of the AI/ML model, or feedback for the AI/ML model. If signaling between nodes is not required prior to the operation based on the AI/ML model in the present disclosure, Step 1 may be omitted. In the case where a One-side model is used in the present disclosure, the unidirectional/bidirectional signaling (set) in the present disclosure may correspond to Step 1 signaling. In addition, in the case where a Two-side model is used in the present disclosure, the unidirectional/bidirectional signaling in the present disclosure may correspond to Step 1 signaling, and repetitive signaling operations may also correspond to Step 1 signaling.

For example, in AI/ML model-based beam management (BM), if a base station predicts (i.e., infers) one or more beams of good quality based on an AI/ML model, the base station may receive quality/strength information for a plurality of beams from a UE. Also, if a UE predicts (i.e., infers) one or more beams of good quality based on an AI/ML model, the UE may receive a plurality of beams from the base station.

Step 2: In the following description of the present disclosure, an operation (e.g., calculation, selection, prediction, etc.) in a specific node (e.g., a UE, a network, etc.) or a joint operation (e.g., calculation, selection, prediction, etc.) in a plurality of nodes (e.g., a UE, a network, etc.), even without a separate mention, may correspond to Step 2 operation based on one or more functions in a functional framework of the AI/ML model. For example, it may correspond to training (i.e., generation and/or reconstruction) of the AI/ML model of FIG. 7, or inference of the AI/ML model. In the case where a One-side model is used, the operation performed by a single node in the present disclosure may correspond to Step 2 operation, and in the case where a Two-side model is used, the joint operation performed by a plurality of nodes in the present disclosure may correspond to Step 2 operation.

For example, in AI/ML model-based BM, a base station may predict (i.e., infer) one or more beams of good quality based on an AI/ML model by using quality/strength information for a plurality of beams received from a UE as inference data. Also, a terminal may measure a plurality of beams received from a base station and predict (i.e., infer) one or more beams of good quality based on an AI/ML model by using the measurement results as inference data.

Step 3: In the following description of the present disclosure, signaling (e.g., information/data/channel/signal, etc.) or a set of signaling between a specific node (e.g., a UE, a network, etc.) and another node, even without a separate mention, may be interpreted as Step 3 signaling or a set of signaling generated as a result of an operation based on an AI/ML model. For example, it may correspond to an output resulting from inference of the AI/ML model of FIG. 7. If signaling between nodes is not required as a result of an operation based on the AI/ML model in the present disclosure, Step 3 may be omitted. In the case where a One-side model is used, the unidirectional/bidirectional signaling (set) in the present disclosure may correspond to Step 3 signaling. In addition, in the case where a Two-side model is used, the unidirectional/bidirectional signaling in the present disclosure may correspond to Step 3 signaling, and repetitive signaling operations may also correspond to Step 3 signaling.

For example, in AI/ML model-based BM, a base station may transmit to a terminal one or more beams predicted based on an AI/ML model as candidates so that the UE may determine an optimal beam. Also, a UE may report to a base station one or more beams predicted based on an AI/ML model as candidates in order to request candidate beam transmission from the base station for determining an optimal beam.

Method for configuring/defining/restricting the number of CSI processing units (CPUs)

In the present disclosure, methods of configuring/defining/restricting the number of CPUs are specifically proposed, in consideration of a case where the number of CPUs required for CSI processing in an improved wireless communication system exceeds the number of CPUs supported by a UE.

In the case of an improved wireless communication system, with respect to CSI reporting, a codebook type related to CSI prediction (e.g., UE-side CSI prediction, etc.) may be configured for the UE via higher-layer signaling and the like.

For example, with respect to CSI prediction, a time-domain compression codebook may be considered. The time-domain compression codebook may mean a type of codebook for configuring a UE to measure/calculate/report compressed CSI (e.g., one (predicted) PMI/CQI, etc.) for an interval consisting of one or more time units (e.g., slot, frame, etc.). In a specific example, the time-domain compression codebook may correspond to a codebook type based on doppler or doppler port selection. In this regard, the time-domain compression codebook may be applicable/configurable for both CSI for a single user (e.g., Type-1 CSI) and CSI for multiple users (e.g., Type-2 CSI).

Based on the foregoing description, the time-domain compression codebook described in the present disclosure may also be referred to or alternatively applied as a CSI prediction-related codebook, a CSI compression-related codebook, a doppler-based codebook, a doppler-selection-based codebook, and the like.

In relation to the proposed method of the present disclosure, an agreement on CPU occupation may be considered as follows.

With respect to the time-domain compression codebook

With respect to CPU occupation, for Type-2 codebook refinement/enhancement for high/medium velocities, if periodic/semi-persistent CSI-RS is configured as a measurement resource (e.g., CMR (channel measurement resource), etc.), the number of CPU occupations ($O_{CPU}$) may be $Y*N_4$. For example, if the periodic/semi-persistent CSI-RS is configured for the CMR, the number of CPU occupations may be equal to or greater than 4. Here, Y is a value equal to or greater than 1 (e.g., one of {1, 2, 3}), and may be defined based on UE capability/codebook parameter value, or may be determined by the terminal. In addition, $N_4$ may mean the number of slot intervals related to prediction, and may correspond to one of pre-defined candidate values (e.g., {1, 2, 4, 8}). For example, when the value of $N_4$ is 1, the number of CPU occupations may be 4.

Alternatively, with respect to CPU occupation, for Type-2 codebook refinement for high/medium velocities, if aperiodic CSI-RS is configured as a measurement resource (for example, CMR, etc.), the number of CPU occupations may be $Y*K$. Here, Y is a value equal to or greater than 1 (e.g., one of {1, 2, 3}), and may be defined based on UE capability/codebook parameter value, or may be determined by the UE. In addition, K may mean the number of aperiodic CSI-RSs configured as measurement resources.

In this regard, the value of Y may be defined/configured differently between a case where periodic/semi-persistent CSI-RS is configured as a measurement resource and a case where aperiodic CSI-RS is configured as a measurement resource.

- With respect to coherent joint transmission (CJT)

For Type-2 codebook refinement/enhancement for CJT multi-transmission and reception point (mTRP), the number of CPU occupations ($O_{CPU}$) may be X. Here, when the number of TRPs ($N_{TRP}$) is greater than 1, the value of X may be equal to or greater than 1, and the value may be based on UE capability, or may be determined by the UE. In this regard, when the number of TRPs is 1, the number of CPU occupations may be 1.

- With respect to time-domain channel properties (TDCP)

For tracking RS (TRS)-based TDCP reporting, when P delay(s) is configured, the number of CPU occupations ($O_{CPU}$) may be $(P+1)*M$. Here, M may be equal to or greater than 1, and the value may be based on UE capability, or may be determined by the UE.

According to the above agreement(s), the number of CPU occupations ($O_{CPU}$) required for CSI processing may be determined according to the Y value, X value, and/or M value reported as capability information by the UE. However, there may occur a case where the value of the number of CPU occupations determined in this manner is greater than the number of CPUs supported by the UE (e.g., the number of CPUs supportable per CC (simultaneousCSI-ReportsPerCC)) as reported by the UE.

For example, in the case of a terminal that reported that the Y value is 2, if the time-domain compression codebook is configured and periodic CSI-RS is configured as a CMR, the number of CPU occupations may be determined by the formula $O_{CPU}=Y*N_4$, and for the case where the $N_4$ value is {2, 4, 8}, the number of CPU occupations may be determined as {4, 8, 16}. If the number of CPUs supportable per CC reported by the UE is 8, CSI calculation is impossible for the case where the $N_4$ value is 8, since the required number of CPUs is determined as 16.

Hereinafter, various examples of methods for solving the problem of exceeding the required number of CPU occupations as described above will be explained.

Embodiment 1

In order to solve the aforementioned problem, the UE may not expect to be configured with a codebook parameter that causes the number of CPU occupations ($O_{CPU}$) to have a value greater than the number of CPUs supportable per CC.

In this regard, the base station may not configure a codebook parameter that causes the number of CPU occupations ($O_{CPU}$) to have a value greater than the number of CPUs supportable per CC.

For example, with respect to the codebook parameter $N_4$, the UE may not expect to be configured with an $N_4$ value of 8.

Additionally, in the Equations "$O_{CPU}=Y*K$," "$O_{CPU}=X*NTRP$," and/or "$O_{CPU}=(P+1)*M$," the UE may report the Y value, X value, and/or M value, and the UE may not expect to be configured with the codebook parameter K, $N_{TRP}$, and/or P that causes the number of CPU occupations ($O_{CPU}$) to have a value greater than the number of CPUs supportable per CC.

Embodiment 2

In order to solve the aforementioned problem, when the number of CPU occupations ($O_{CPU}$) calculated through the aforementioned Equations (e.g., "$O_{CPU}=Y*K$," "$O_{CPU}=X*NTRP$," and/or "$O_{CPU}=(P+1)*M$") has a value greater than the number of CPUs supportable per CC, the UE may recalculate and apply the number of CPU occupations as the number of CPUs supportable per CC.

In this case, the number of CPU occupations may be the number of CPUs supportable per CC of the UE. In other words, the UE may process and report the CSI by using all CPUs available in the corresponding CC.

In this regard, the method may be applied only when the number of CPUs supportable per CC is equal to or greater than a certain value (e.g., 4). Through this, for the case where the number of CPUs of the terminal is excessively small (e.g., equal to or less than 4), the number of CPU occupations may not be recalculated according to the method, and the method may be applied only in the case of being equal to or greater than a certain value.

Embodiment 3

With respect to the number of CPU occupations related to the time-domain compression codebook, in the case where the number of CPU occupations ($O_{CPU}$) is $Y*K$, when the K value is configured to a value exceeding the number of CPUs supportable per CC of the UE, even when the Y value is the minimum value of 1, the number of CPU occupations exceeds the number of CPUs supportable per CC of the UE.

That is, when the calculation Equation of the number of CPU occupations ($O_{CPU}$) is $Y*K$, if the number of aperiodic CSI-RSs configured as measurement resources (e.g., CMR, etc.) exceeds the number of CPUs supportable per CC of the UE, the number of CPU occupations exceeds the number of CPUs supportable per CC of the UE regardless of the Y value.

Therefore, in the present disclosure, when the K value, i.e., the number of aperiodic CSI-RS resources configured as measurement resources, exceeds the number of CPUs supportable per CC of the UE, a method is proposed to fix the number of CPU occupations to the number of CPUs supportable per CC of the UE, instead of the aforementioned Equation, i.e., $O_{CPU}=Y*K$.

For example, when the K value is 12, the number of CPU occupations ($O_{CPU}$) may be fixed to 8, which corresponds to the number of CPUs supportable per CC of the UE, instead of $Y*12$.

Embodiment 4

In order to solve the aforementioned problem, the UE may calculate/process the CSI by using CPUs available not only in the corresponding CC of the CSI but also in other CCs.

The UE may report information regarding the number of CPUs supportable across all CCs (e.g., simultaneousCSI-ReportsAllCC), in addition to the number of CPUs supportable per CC (e.g., simultaneousCSI-ReportsPerCC). Based thereon, when the number of CPU occupations ($O_{CPU}$) is less than or equal to the number of CPUs supportable across all CCs and there exist CPUs unused in other CCs, the UE may also use the corresponding CPUs to calculate/process the CSI.

Additionally, the method may be applied only when the sum of remaining (i.e., unused) CPUs in the CC of the CSI and the remaining CPUs in other CCs is smaller than the number of CPU occupations ($O_{CPU}$).

Embodiment 5

In order to solve the aforementioned problem, the UE may periodically or aperiodically report information regarding CPU occupation to the base station.

For example, information regarding CPU occupation may include information for the number of unused CPUs at a specific timing in time. Here, the specific timing in time may include the reporting time of the corresponding CSI, or a certain number of slots prior to the reporting time.

Various embodiments/methods described in the present disclosure have been explained based on a comparison between the reported number of CPUs supportable per CC (e.g., simultaneousCSI-ReportsPerCC) and the CPU occupation. Similarly, with respect to the methods proposed in the present disclosure, instead of the number of CPUs supportable per CC, the number of CPUs supportable across all CCs (e.g., simultaneousCSI-ReportsAllCC) reported by the UE may be applied. That is, in the proposed methods of the present disclosure, the number of CPUs supportable per CC may be replaced with the number of CPUs supportable across all CCs.

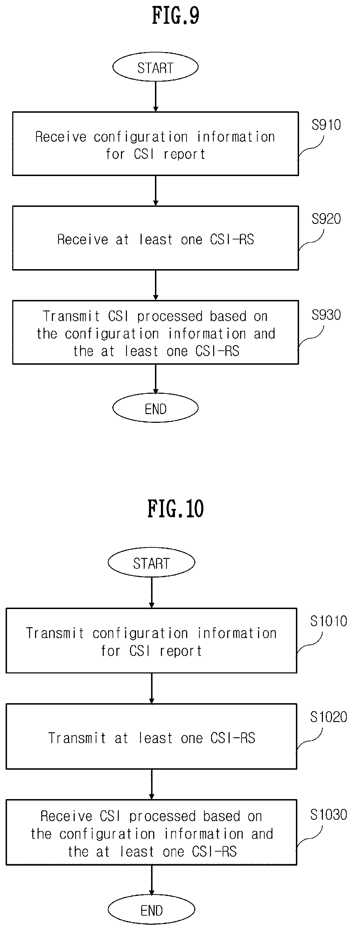

FIGs. 9 and 10 illustrate examples of UE operations and base station operations in relation to methods for defining/configuring/determining CPU occupation according to the embodiments of the present disclosure described above.

FIG. 9 is a diagram for explaining operations of a UE in a wireless communication system to which the present disclosure may be applied.

Referring to FIG. 9, the UE may receive configuration information for CSI reporting from a base station (S910).

In this regard, based on the received configuration information, information for a type of codebook related to CSI reporting may be configured/indicated to the UE.

The UE may receive at least one CSI-RS from the base station (S920).

The at least one CSI-RS may be a CSI-RS configured for measurements related to the CSI reporting in step S910.

Subsequently, the UE may transmit/report CSI which is processed to the base station based on the configuration information in step S910 and the at least one CSI-RS in step S920 (S930).

In this regard, when a specific codebook type related to CSI prediction is set by the aforementioned configuration information, and N aperiodic CSI-RSs for channel measurement (e.g., N aperiodic CSI-RSs configured as CMRs) are configured for the corresponding CSI reporting, the number of CSI processing units (CPU) for processing the CSI may be N*M. Here, the value M may be based on the UE capability information and may be a value reported to the base station as UE capability information. For example, the N and M values described in FIG. 9 may correspond to the K and Y values in Embodiment 3 described above.

Here, the specific codebook type may correspond to a codebook type based on time-domain compression for CSI prediction. Specifically, the codebook type based on time-domain compression may be a doppler-based codebook or a doppler-based port selection codebook.

In addition, the number of CPUs simultaneously supportable by the UE may correspond to the number of CPUs simultaneously supportable per component carrier (CC) or the number of CPUs simultaneously supportable across all CCs.

At this time, when the aforementioned N value exceeds the number of CPUs simultaneously supportable by the UE, the number of CSI processing units for processing the CSI may be fixed to a pre-defined specific value.

For example, when the N value is 12, the number of CSI processing units for processing the CSI may be fixed to 8. For example, the aforementioned pre-defined specific value may correspond to the maximum number of CPUs simultaneously supportable by the UE.

Additionally, the UE may periodically or aperiodically transmit to the base station information regarding the number of CPUs that are not occupied/used at a specific time related to the CSI transmission (for example, at the CSI reporting time or a certain number of slots prior to the CSI reporting time).

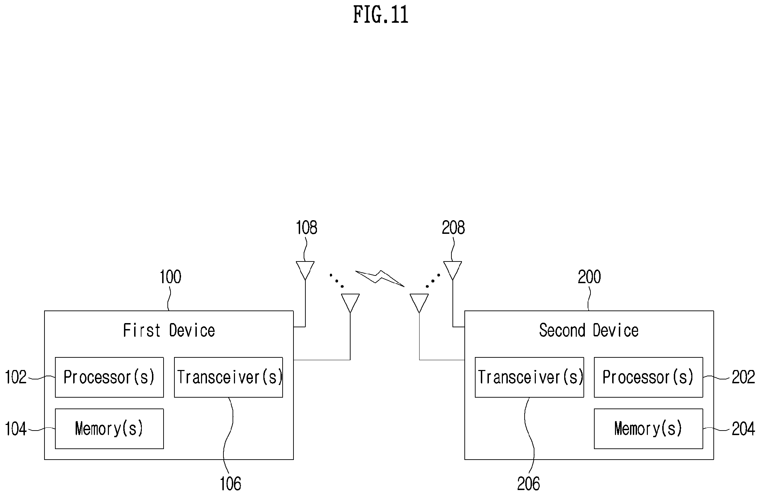

The method described in the example of FIG. 9 may be performed by the first device (100) of FIG. 11. That is, the UE of Figure 11 may be implemented as the first device (100). For example, one or more processors (102) of the first device (100) of FIG. 11 may be configured to receive configuration information for CSI reporting, receive at least one CSI-RS, and transmit CSI processed based on the configuration information and the at least one CSI-RS through one or more transceivers (106).

Further, one or more memories (104) of the first device (100) may store instructions for performing the methods described in the example of FIG. 9 or the other examples described below, when executed by one or more processors (102).

FIG. 10 is a diagram for explaining operations of a base station in a wireless communication system to which the present disclosure may be applied.

Referring to FIG. 10, the base station may transmit configuration information for CSI reporting to the UE (S1010).

In this regard, based on the corresponding configuration information, information for a type of codebook related to CSI reporting may be configured/indicated to the UE.

The base station may transmit at least one CSI-RS to the UE (S1020).

The at least one CSI-RS may be a CSI-RS configured for measurements related to the CSI reporting in step S910.

Subsequently, the base station may receive/report CSI processed based on the configuration information in step S1010 and the at least one CSI-RS in step S1020 (S1030) from the UE.

In this regard, when a specific codebook type related to CSI prediction is set by the aforementioned configuration information, and N aperiodic CSI-RSs are configured for channel measurements (e.g., N aperiodic CSI-RSs configured as CMRs) for the corresponding CSI reporting, the number of CSI processing units (CPU) for processing the CSI may be N*M. Here, the value M may be based on UE capability information and may be a value reported to the base station as UE capability information. For example, the N and M values described in FIG. 9 may correspond to the K and Y values in Embodiment 3 described above.

At this time, when the aforementioned N value exceeds the number of CPUs simultaneously supportable by the UE, the number of CSI processing units for processing the CSI may be fixed to a pre-defined specific value.

Specific features such as the specific codebook type related to CSI prediction, the number of CSI processing units for processing the CSI, the number of CPUs simultaneously supportable by the UE, the N aperiodic CSI-RSs configured for the UE, and the M value based on UE capability information are the same as the description referring to FIG. 9, and therefore, redundant descriptions are omitted.

The method described in the example of FIG. 10 may be performed by the second device (200) of FIG. 11. That is, the base station of FIG. 10 may be implemented as the second device (200). For example, one or more processors (202) of the second device (200) of FIG. 10 may be configured, through one or more transceivers (206), to transmit configuration information for CSI reporting, transmit at least one CSI-RS, and receive CSI processed based on the configuration information and the at least one CSI-RS.

Further, one or more memories (204) of the second device (200) may store instructions for performing the methods described in the example of FIG. 10 or the other examples described below, when executed by one or more processors (202).

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, LTE-A, LTE-A pro, NR, 5G, 5G-A, 6G).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned.

Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[INDUSTRIAL APPLICABILITY]

A method proposed by the present disclosure is mainly described based on an example applied to 3GPP LTE/LTE-A, 5G, 6G system, but may be applied to various wireless communication systems other than the 3GPP LTE/LTE-A, 5G, 6G system.

**Claims**

1.  A method performed by a user equipment in a wireless communication system, the method comprising:

    receiving configuration information for channel state information (CSI) report;
    receiving at least one CSI-reference signal (CSI-RS); and
    transmitting CSI processed based on the configuration information and the at least one CSI-RS,
    wherein, based on a specific codebook type related to CSI prediction being configured by the configuration information and N aperiodic CSI-RSs for channel measurement being configured for the CSI report, a number of CSI processing units for processing the CSI is N*M, wherein M is based on capability information of the UE, and wherein, based on that the N exceeds a number of CPUs simultaneously supportable by the UE, the number of CSI processing units for processing the CSI is fixed to a pre-defined specific value.

2. The method of claim 1, wherein:
the number of CPUs simultaneously supportable by the UE corresponds to a number of CPUs simultaneously supportable by the UE per a component carrier (CC).

3. The method of claim 1, wherein:
the number of CPUs simultaneously supportable by the UE corresponds to a number of CPUs simultaneously supportable by the UE across entire component carriers (CCs).

4. The method of claim 1, wherein:
based on that the N is 12, the number of CSI processing units for processing the CSI is fixed to 8.

5. The method of claim 1, wherein:
the predefined specific value is a maximum value of the number of CPUs simultaneously supportable by the UE.

6. The method of claim 1, wherein:
the M is a value reported to a base station as capability information of the UE.

7. The method of claim 1, wherein:
resources for the N aperiodic CSI-RSs are configured as channel measurement resources for the CSI report.

8. The method of claim 1, wherein:
the specific codebook type corresponds to a codebook type based on compression in a time domain for the CSI prediction.

9. The method of claim 8, wherein:
the codebook type based on the compression in the time domain is a doppler-based codebook or a doppler-based port selection codebook.

10. The method of claim 1, further comprising:
transmitting, periodically or aperiodically to a base station, information for a number of CPUs unoccupied at a specific timing related to a transmission timing of the CSI.

11. A user equipment (UE) in a wireless communication system, the UE comprising:

at least one transceiver; and
at least one processor coupled with the at least one transceiver,
wherein the at least one processor is configured to:

receive configuration information for channel state information (CSI) report;
receive at least one CSI-reference signal (CSI-RS); and
transmit CSI processed based on the configuration information and the at least one CSI-RS,

wherein, based on a specific codebook type related to CSI prediction being configured by the configuration information and N aperiodic CSI-RSs for channel measurement being configured for the CSI report, a number of CSI processing units for processing the CSI is N*M, wherein M is based on capability information of the UE, and wherein, based on that the N exceeds a number of CPUs simultaneously supportable by the UE, the number of CSI processing units for processing the CSI is fixed to a pre-defined specific value.

12. A method performed by a base station in a wireless communication system, the method comprising:

transmitting configuration information for channel state information (CSI) report;
transmitting at least one CSI-reference signal (CSI-RS); and
receiving CSI processed based on the configuration information and the at least one CSI-RS,

wherein, based on a specific codebook type related to CSI prediction being configured by the configuration information and N aperiodic CSI-RSs for channel measurement being configured for the CSI report, a number of CSI processing units for processing the CSI is N*M, wherein M is based on capability information of the UE, and wherein, based on that the N exceeds a number of CPUs simultaneously supportable by the UE, the number of CSI processing units for processing the CSI is fixed to a pre-defined specific value.

13. A base station in a wireless communication system, the base station comprising:

at least one transceiver; and
at least one processor coupled with the at least one transceiver,
wherein the at least one processor is configured to:

transmit configuration information for channel state information (CSI) report;
transmit at least one CSI-reference signal (CSI-RS); and
receive CSI processed based on the configuration information and the at least one CSI-RS,

wherein, based on a specific codebook type related to CSI prediction being configured by the configuration information and N aperiodic CSI-RSs for channel measurement being configured for the CSI report, a number of CSI processing units for processing the CSI is N*M, wherein M is based on capability information of the UE, and wherein, based on that the N exceeds a number of CPUs simultaneously supportable by the UE, the number of CSI processing units for processing the CSI is fixed to a pre-defined specific value.

14. A processing device configured to control a user equipment in a wireless communication system, the processing device comprising:

one or more processors; and
one or more computer memories operably connected to the one or more processors and storing instructions that, when executed by the one or more processors, cause operations to be performed,
wherein the operations comprise:

receiving configuration information for channel state information (CSI) report;
receiving at least one CSI-reference signal (CSI-RS); and
transmitting CSI processed based on the configuration information and the at least one CSI-RS,

wherein, based on a specific codebook type related to CSI prediction being configured by the configuration information and N aperiodic CSI-RSs for channel measurement being configured for the CSI report, a number of CSI processing units for processing the CSI is N*M, wherein M is based on capability information of the UE, and wherein, based on that the N exceeds a number of CPUs simultaneously supportable by the UE, the number of CSI processing units for processing the CSI is fixed to a pre-defined specific value.

15. One or more non-transitory computer-readable media storing one or more instructions, wherein the one or more instructions, when executed by one or more processors, cause a user equipment to:

receive configuration information for channel state information (CSI) report;
receive at least one CSI-reference signal (CSI-RS); and
transmit CSI processed based on the configuration information and the at least one CSI-RS,
wherein, based on a specific codebook type related to CSI prediction being configured by the configuration information and N aperiodic CSI-RSs for channel measurement being configured for the CSI report, a number of CSI processing units for processing the CSI is N*M, wherein M is based on capability information of the UE, and wherein, based on that the N exceeds a number of CPUs simultaneously supportable by the UE, the number of CSI processing units for processing the CSI is fixed to a pre-defined specific value.

# FIG.1

# FIG.2

## FIG.3

# FIG.4

# FIG.5

Resource grid

A carrier (up to 3300 subcarriers, i.e., 275 RBs)

A BWP

1 RB=12 subcarrier

1 RE

1 subcarrier

1 Symbol

I=0 .....

k=0

# FIG.6

UE (110)                                                    BS (110)

Synchronization (101)

Obtain System Information (103)

Random Access (105)

Control Information Signaling (107)

Transmit/Receive Data (109)

# FIG.7

Data Collection (10)

11 — Training Data → Model training(20)

12 — Monitoring Data → Management(30)

13 — Inference Data → Inference(40)

21 — Trained/Updated Model

31 — Performance Feedback Retraining Request

33 — Model Transfer/Delivery Request

41 — Inference Output

32 — Management Instruction

Model storage(50)

51 — Model Transfer/Delivery

EP 4 761 129 A1

# FIG.8

FIRST NODE                    SECOND NODE

1. FIRST SIGNALING

2. PERFORMING OPERATIONS BASED ON AI/ML MODEL

3. SECOND SIGNALING

# FIG.9

START

Receive configuration information for CSI report — S910

Receive at least one CSI-RS — S920

Transmit CSI processed based on the configuration information and the at least one CSI-RS — S930

END

# FIG.10

START

Transmit configuration information for CSI report — S1010

Transmit at least one CSI-RS — S1020

Receive CSI processed based on the configuration information and the at least one CSI-RS — S1030

END

EP 4 761 129 A1

# FIG.11

## INTERNATIONAL SEARCH REPORT

| | International application No. |
| --- | --- |
| | **PCT/KR2024/011642** |

| A. | CLASSIFICATION OF SUBJECT MATTER |
| --- | --- |

**H04B 7/06**(2006.01)i; **H04B 7/0456**(2017.01)i; **H04B 17/373**(2015.01)i; **H04B 7/01**(2006.01)i; **H04W 8/24**(2009.01)i; **H04L 5/00**(2006.01)i; **H04W 88/02**(2009.01)i

According to International Patent Classification (IPC) or to both national classification and IPC

| B. | FIELDS SEARCHED |
| --- | --- |

Minimum documentation searched (classification system followed by classification symbols)

H04B 7/06(2006.01); H04L 25/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI 예측(channel state information prediction), 코드북(codebook), 비주기적 CSI-RS(aperiodic CSI-RS), CSI 처리 유닛(CSI processing unit, CPU), 능력 정보(capability information)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | MEDIATEK INC. CSI enhancement. R1-2305669, 3GPP TSG RAN WG1 #113. Incheon, Korea. 15 May 2023.<br>See sections 2.1-2.2. | 1-15 |
| A | NOKIA. Introduction of specification support for MIMO enhancements on CSI. R1-2306330, 3GPP TSG RAN WG1 #113. Incheon, Korea. 12 June 2023.<br>See section 5.2.1.6. | 1-15 |
| A | HUAWEI et al. CSI enhancement for coherent JT and mobility. R1-2304638, 3GPP TSG RAN WG1 #113. Incheon, Korea. 15 May 2023.<br>See section 3.2. | 1-15 |
| A | VIVO. Discussion on CSI enhancement for high-medium UE velocities and coherent JT. R1-2304465, 3GPP TSG RAN WG1 #113. Incheon, Korea. 15 May 2023.<br>See section 2.1.2. | 1-15 |
| A | WO 2023-081187 A1 (INTERDIGITAL PATENT HOLDINGS, INC.) 11 May 2023 (2023-05-11)<br>See paragraphs [0090]-[0129]. | 1-15 |

| ☐ Further documents are listed in the continuation of Box C. | ✓ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **15 November 2024** | **15 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011642**

| Patent document cited in search report | | | Publication date (day/month/year) | Patent family member(s) | | | Publication date (day/month/year) |
|---|---|---|---|---|---|---|---|
| WO | 2023-081187 | A1 | 11 May 2023 | CN | 118369858 | A | 19 July 2024 |
| | | | | KR | 10-2024-0096675 | A | 26 June 2024 |

Form PCT/ISA/210 (patent family annex) (July 2022)